# EUROPEAN PATENT SPECIFICATION

(11) **EP 3 988 275 B1**
(45) Date of publication and mention of the grant of the patent: **17.05.2023**
(21) Application number: 21202286.7
(22) Date of filing: 12.10.2021
(51) Int. Cl.: B29C 51/42, B29C 51/26, B29C 51/10

(54) **THERMOFORMING APPARATUS**
THERMOFORMUNGSVORRICHTUNG
APPAREIL DE THERMOFORMAGE

(30) Priority: 15.10.2020 IT 202000024394
(43) Date of publication of application: 27.04.2022
(73) Proprietor: C.M.S. S.p.A., 24019 Zogno (BG) (IT)
(72) Inventor: GAIAZZI, Fabio, 21040 Sumirago (VA) (IT)
(74) Representative: Luppi Intellectual Property S.r.l.

(56) References cited:
- DE-A1- 4 035 224
- US-A- 5 562 933
- US-B1- 6 450 793
- US-B1- 6 808 665

## Description

### Background of the invention

The invention concerns an apparatus for the thermoforming of plastics, in particular for the thermoforming of plate or sheet material, where by plate or sheet we mean a body that has two main dimensions with respect to the third (thickness).

Related prior art apparatuses are described in patent documents DE40-35224A1, US6808-665B1 and US6450-793B1.

Specifically, but not exclusively, the present invention can be usefully used for the thermoforming of articles usable in numerous sectors such as, for example, automotive, aerospace, production of agricultural machinery, earth-moving machinery, caravans, buses, garage, railway industry, refrigeration, aesthetics, electro-medical, production of bathtubs, shower trays, shower walls, SPAs, suitcases, billboards, advertising signs, trays, etc.

The thermoforming apparatus in question can be configured, in particular, for a vacuum thermoforming, in which a preheated plate rests on a die by suction copying the conformation of the die itself, or for a thermoforming under pressure, in which the plate is pushed onto the die by a pressure exerted by a fluid or by a punch or counter-mold, or for other types of thermoforming.

The prior art comprises a thermoforming apparatus with a horizontal support surface to support a heated plate, a die arranged under the support surface to define a thermoforming cavity, and an operating unit (counter-mold or plate-pressing frame) arranged above the support surface and movable in a vertical direction so as to assume a lower position in which it interacts with the plate, for example to push the plate downwards to facilitate thermoforming on the die or to press and fix the edge of the plate.

The apparatuses of the prior art can be improved in various aspects.

In the first place, it is desirable to provide an apparatus which allows to facilitate and improve the cooling of the thermoformed product.

It is also desirable to reduce the cooling times of the product after thermoforming to allow a rapid removal of the thermoformed product from the apparatus and therefore speed up the production cycle.

### Summary of the invention

An object of the present invention is to obviate one or more of the aforementioned limitations and drawbacks of the prior art.

An object of the invention is to provide an alternative thermoforming apparatus with respect to the prior art.

An advantage is to give rise to a thermoforming apparatus comprising a frame (usable for example as a plate-pressing frame or to support tooling means) which is vertically movable by means of a drive system and which is provided with a number of components relatively small.

An advantage is to reduce the cooling times of the product after thermoforming to speed up the production cycle.

An advantage is to allow easy, rapid and remarkably effective cooling of the thermoformed product.

An advantage is to shorten the cooling times of the plate or sheet material in the moments immediately following the thermoforming process.

These aims and advantages, and others besides, are achieved by an apparatus and/or a method according to one or more of the claims reported below.

In one example, a thermoforming apparatus comprises: a thermoforming die configured to perform thermoforming of plate or sheet material; at least one frame (for example a frame configured for use as a plate press frame and/or to support tooling means) movable vertically above the die; two or more uprights to support the frame; a cooling fluid generator; one or more cooling ports arranged on the frame for sending the cooling fluid onto the material; one or more tubular elements to connect the cooling ports with the cooling fluid generator.

### Brief description of the drawings

The invention can be better understood and implemented with reference to the attached drawings that illustrate non-limiting examples of implementation, in which:
Figure 1 is a perspective view of a first example of a thermoforming apparatus according to the invention;
Figure 2 is a side view, in vertical elevation, of the thermoforming apparatus of Figure 1;
Figure 3 shows an enlarged detail of Figure 1;
Figure 4 is a perspective view of a second example of a thermoforming apparatus according to the invention;
Figure 5 is a side view, in vertical elevation, of the thermoforming apparatus of Figure 4;
Figure 6 is a perspective view of a third example of a thermoforming apparatus according to the invention;
Figure 7 is a side view, in vertical elevation, of the thermoforming apparatus of Figure 6;
Figure 8 is a front view of an example of a thermoforming apparatus according to the invention in which the frame that supports the cooling ports is in a lower position;
figure 9 is a side view of the example of the thermoforming apparatus of figure 8;
Figure 10 is a front view of an example of a thermoforming apparatus according to the invention in which the frame that supports the cooling ports is located in an upper position;
Figure 11 is a side view of the example of the thermoforming apparatus of Figure 10;
Figure 12 is a perspective view of the thermoforming apparatus of Figure 8;
Figure 13 is a perspective view of the thermoforming apparatus of Figure 10.

### Detailed description

For simplicity and clarity of presentation, similar elements of different embodiment examples have been indicated with the same numbering.

With reference to the aforementioned figures, the reference numeral 1 generally indicates a thermoforming apparatus suitable for the thermoforming of plastics, in particular for the thermoforming of material in the form of a plate or sheet, where by plate or sheet we mean a body which has two main dimensions with respect to the third and which is delimited by two opposite surfaces located at a mutual distance (i.e. the thickness of the plate or sheet) which is relatively small.

The material to be thermoformed may be supplied in discrete plates or sheets, for example rigid, or it may be supplied in continuous form from reel. The material to be thermoformed may be loaded onto the thermoforming apparatus 1 and/or unloaded from the apparatus manually, automatically or semi-automatically.

The thermoforming apparatus 1 may comprise, in particular, a support surface 2 to support plate or sheet material, for example to support the material in a horizontal position. The thermoformable material may be preheated (by means of heating means, for example heating means of a known type) to a temperature suitable for thermoforming.

The thermoforming apparatus 1 may comprise, in particular, at least one forming die 3, for example arranged under the support surface 2, configured to define a thermoforming cavity of the sheet or sheet material. The forming cavity of the die 3 may exhibit, in particular, at least one opening facing upwards to receive the thermoformable material from above.

The thermoforming apparatus 1 may be configured, in particular, for a vacuum thermoforming (although it is possible that the thermoforming apparatus is configured for other types of thermoforming, for example pressure thermoforming, mechanical thermoforming, etc.), in which the preheated plate or sheet material rests on the die 3 by suction copying the conformation of the die itself.

The thermoforming apparatus 1 may comprise, in particular, at least one frame 4 (for example arranged above the support surface 2 and/or arranged above the forming cavity) which can be moved at least in a vertical direction in both senses.

The frame 4 may comprise, in particular, a perimeter structure that defines a central opening with a free space located vertically above the molding cavity of the die 3 and/or above the plate or sheet material placed on the support surface 2 to be thermoformed.

In particular, the frame 4 may comprise, as in the illustrated examples, at least two first crosspieces opposite and spaced apart and joined together by two second crosspieces opposite and spaced apart. The frame 4 may comprise, in particular, a closedloop perimeter structure, for example rectangular in shape.

The frame 4 may comprise, in particular, at least one plate-pressing edge and may be movable with the possibility of assuming at least one upper position, in which the plate or sheet material to be thermoformed can be positioned on the support surface 2, and at least one lower position, in which one edge of the material is engaged between the plate-pressing edge and the support surface 2, in particular with the interposition of a gasket which allows the forming cavity of the die 3 to be hermetically sealed. under the material, for example to perform vacuum thermoforming.

The thermoforming apparatus 1 may comprise, in particular, two or more support elements (columns) extended vertically, or uprights 5, arranged to support the frame 4 and fixed to a base. Each upright 5 may comprise, in particular, a linear reaction element extending in length in the vertical direction. Each, or at least one, reaction element may comprise, in particular, a vertical linear gear 6 (or rack, or vertical rack).

In the specific examples described here, the group of uprights 5 which supports the frame 4 comprises four uprights 5 arranged at the four vertices of the rectangularshaped perimeter structure of the frame 4.

The thermoforming apparatus 1 may comprise, in particular, two or more drive units 7, one for each upright 5, arranged on the frame 4. The drive units 7 are carried by the frame 4 and are movable together with the frame 4.

Each drive unit 7 may comprise, as in the examples described here, at least one motor (for example an electric motor) and at least one wheel coupled with a respective reaction element and may be rotated by the respective motor. The motorized wheel may comprise, in particular, a toothed wheel, or pinion, or sprocket. The motor may be, in particular, a reversible motor, to allow the movement of the frame 4 both upwards and downwards.

Each toothed wheel of a drive unit 7 may mesh, in particular, with the linear gear 6 of the respective upright 5 to which the drive unit 7 is operatively associated.

In the specific examples, the frame 4 supports four drive units 7 arranged in proximity to the four vertices of the rectangular perimeter structure which is part of the frame 4 itself.

The various drive units 7 are coordinated by programmable electronic control means (for example an electronic processor) so as to collaborate with each other to move the frame 4 vertically by operating simultaneously.

The movement takes place as a result of the actuation of the motors of the drive units 7 and by virtue of the sprocket-rack couplings formed by the toothed wheels of the drive units 7 and the linear gears 6.

The thermoforming apparatus 1 may comprise, in particular, a further frame 8 and two or more further drive units 9 arranged on the further frame 8. The further frame 8 may be arranged, in particular, at a height higher than the support surface 2 and/or the forming cavity of the die 3. The further frame 8 may be moved at least in one direction (in particular vertical) in both directions. In particular, the further frame 8 may be movable independently from the frame 4. The further drive units 9 may be mounted on the further frame 8 and may collaborate with each other to move the further frame 8, in a similar way to how the drive units 7 may collaborate with each other to move the frame 4.

Each further drive unit 9 may comprise, in particular, at least one further motor and at least one further toothed wheel that may be rotated by the respective further motor. Each further toothed wheel may mesh with a further linear gear 11 arranged vertically on a respective further upright 5 (or, in other examples, on the same upright 5 which carries a linear gear 6).

In these specific examples, the uprights 5 and the further uprights 5 are distinct from each other and are fixed to the same base. However, it is possible to provide embodiments in which a linear gear 6 and a further linear gear 11 are arranged on the same upright 5.

The further frame 8 may can comprise, in particular, a perimeter structure in a (closed) ring which defines a central opening with a free space arranged vertically above the plate or sheet material on the support surface 2 or on the die 3. In particular, the further frame 8 may comprise at least two first crosspieces opposite and spaced apart and joined together by two second crosspieces opposite and spaced apart. The further frame 8 may include, in particular, a perimeter structure with a (closed) ring, for example rectangular in shape.

The further frame 8 may be configured, in particular, to support tooling means that may be used in the thermoforming process. The tooling means carried by the further frame 8 may include, in particular, a counter-mold configured to interact with the thermoplastic material to be thermoformed, for example to touch the material during thermoforming in order to avoid the formation of unwanted creases or other imperfections. The tooling means carried by the further frame 8 may comprise, in particular, means for cooling the thermoformed material, which may in turn comprise, as in the specific case, a plurality of ports 10 for the outlet of a cooling fluid (for example air). The cooling ports 10 are mounted on the further frame 8, in particular by means of brackets fixed with screws, on at least one side, or on at least two or more sides, of the further frame 8. The cooling ports 10 may be, in particular, automatically orientable to direct the cooling fluid towards the center of the material to be cooled.

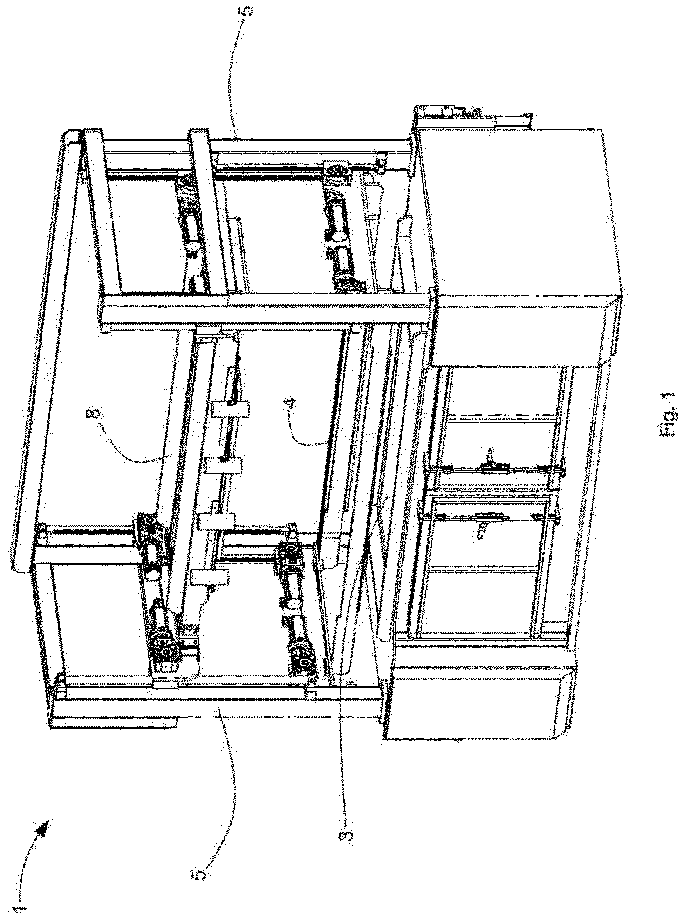

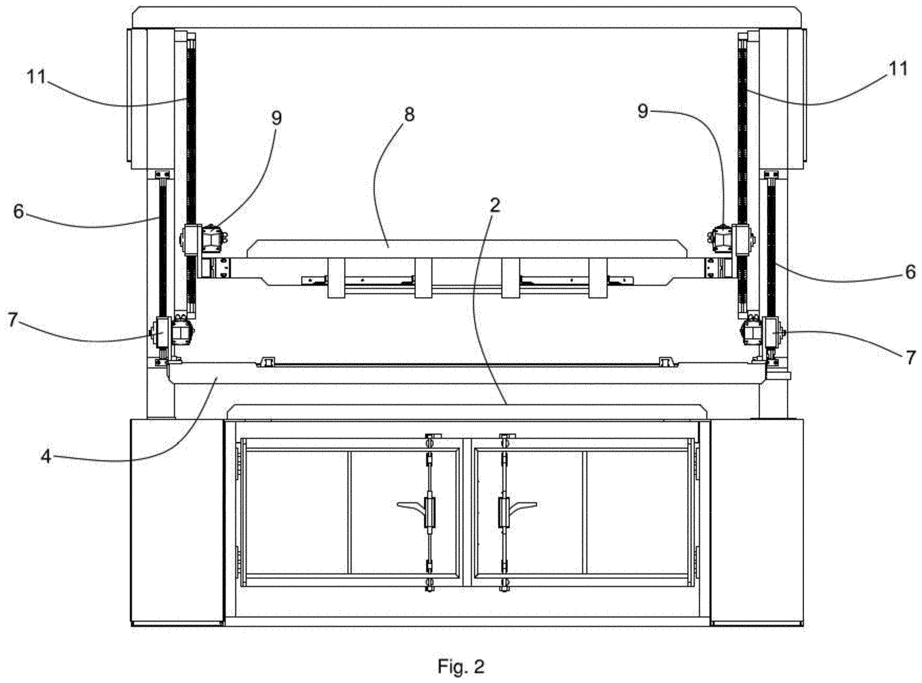

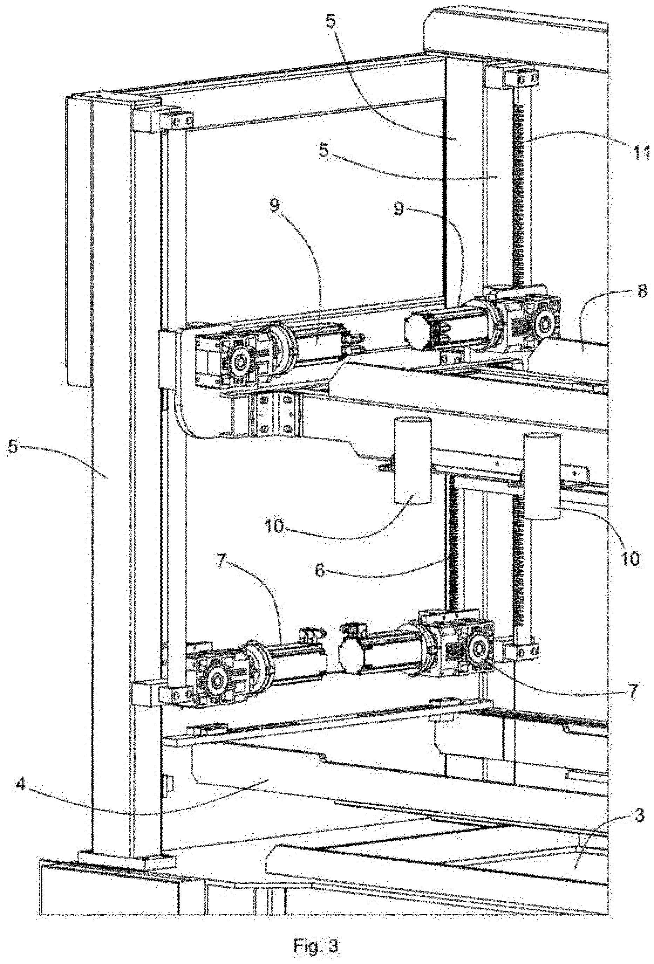

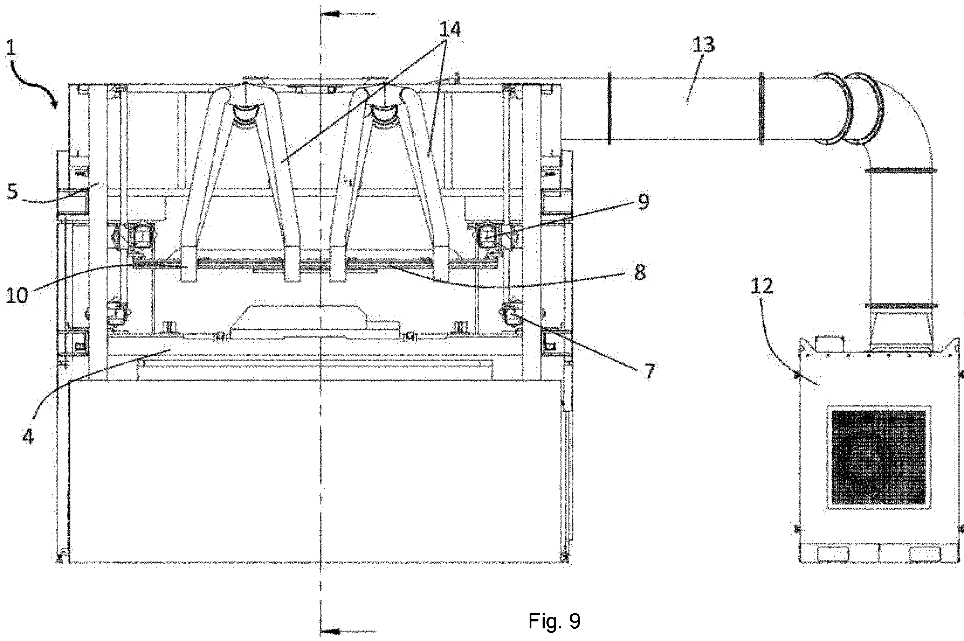

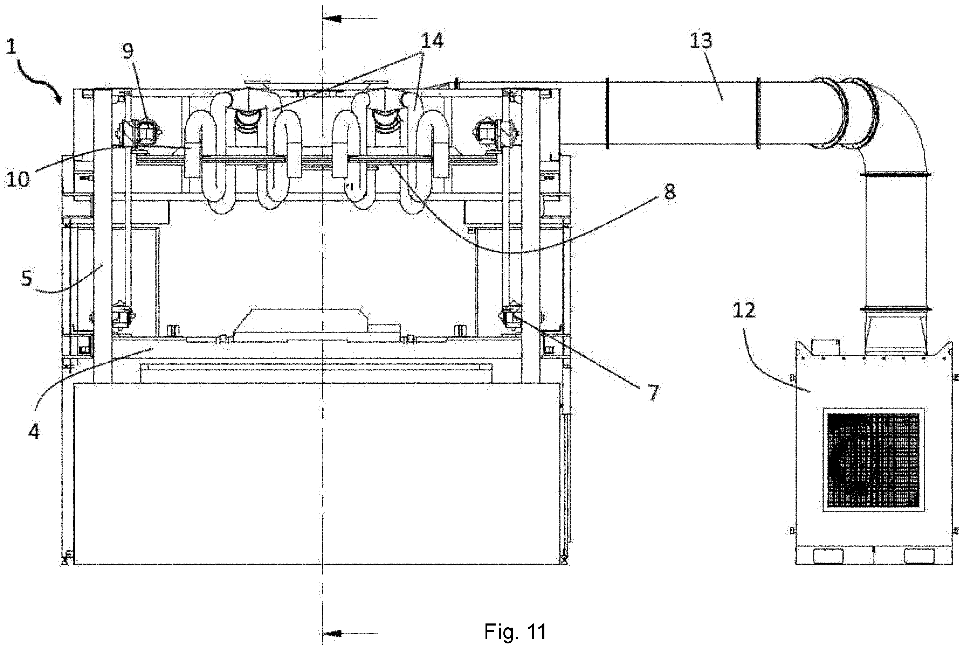

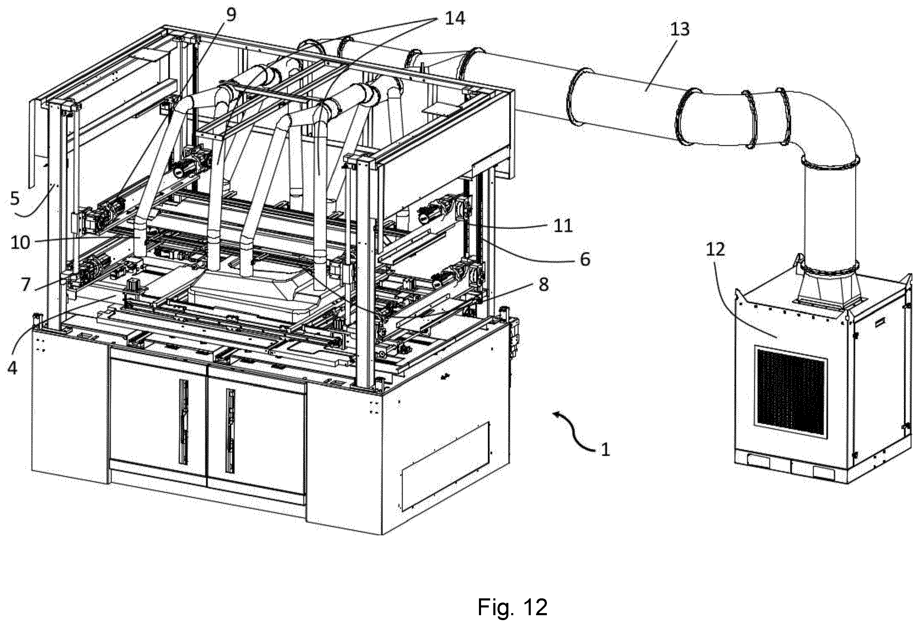

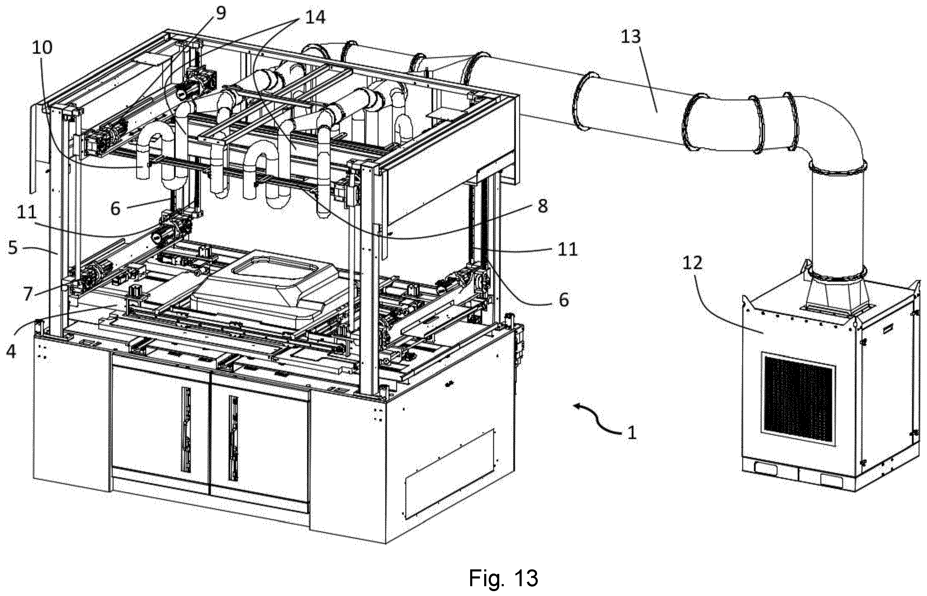

In the example of Figures 1-3 and 8-13, the thermoforming apparatus 1 comprises both a frame 4 (in particular with the function of pressing the plate), and a further frame 8 (in particular with the function of supporting tooling means, such as for example tooling means comprising a counter-mold and/or cooling means). In particular, the thermoforming apparatus 1 may comprise two frames (for example the frame 4 and the further frame 8) each of which comprises a perimeter structure (for example rectangular), in which the perimeter structure of a frame (for example the further frame 8 or the frame 4) may have dimensions greater than the dimensions of the perimeter structure of the other frame (for example the frame 4 or the further frame 8) so that the smaller frame is at least partly or entirely insertable into the central opening defined by the perimeter structure of the larger frame.

The thermoforming apparatus 1 may comprise, as in this example, a vertical bearing structure comprising a plurality of uprights 5 and/or further uprights 5 that support the frame 4 and/or the further frame 8.

In particular, each upright 5 may carry a vertical linear gear 6 (or rack, or ratchet) coupled with a toothed wheel (or pinion, or sprocket) of a drive unit 7 of the frame 4, and each further upright 5 may carry a further vertical linear gear 11 coupled with a toothed wheel of a further drive unit 9 of the further frame 8.

It is possible to provide, in other examples not illustrated, that each upright 5 supports a single vertical linear gear which is coupled both with a toothed wheel of a drive unit 7 of the frame 4, and with a toothed wheel of a further drive unit 9 of the further frame 8. It is possible to provide, in other examples not shown, that each upright 5 supports both a linear gear 6 coupled to a drive unit 7 of the frame 4, and a further linear gear 11 coupled to a further drive unit 9 of the further frame 8.

It is possible to provide, in other examples not shown, that the thermoforming apparatus 1 comprises a vertical bearing structure with uprights (for example four uprights) that support both the frame 4 and the further frame 8.

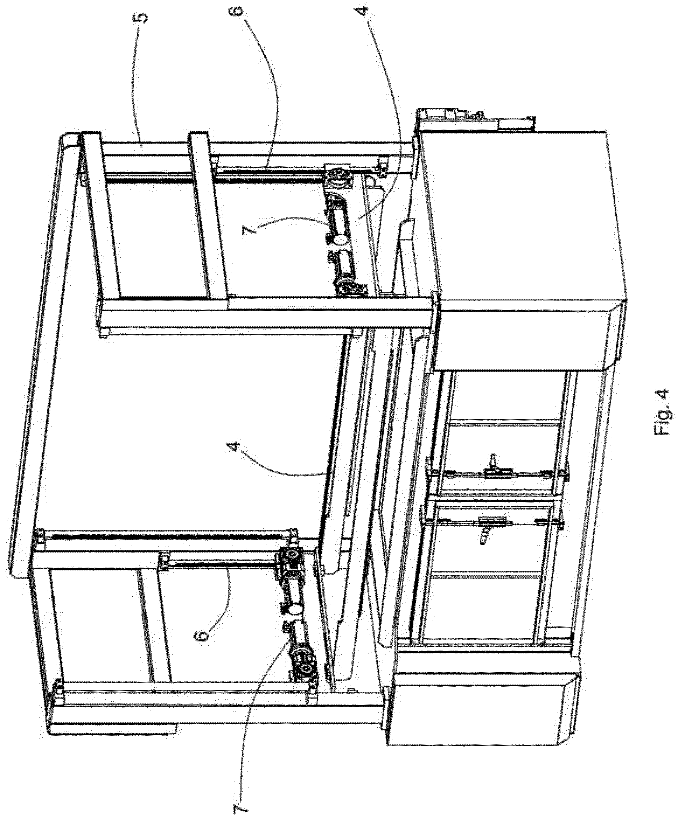

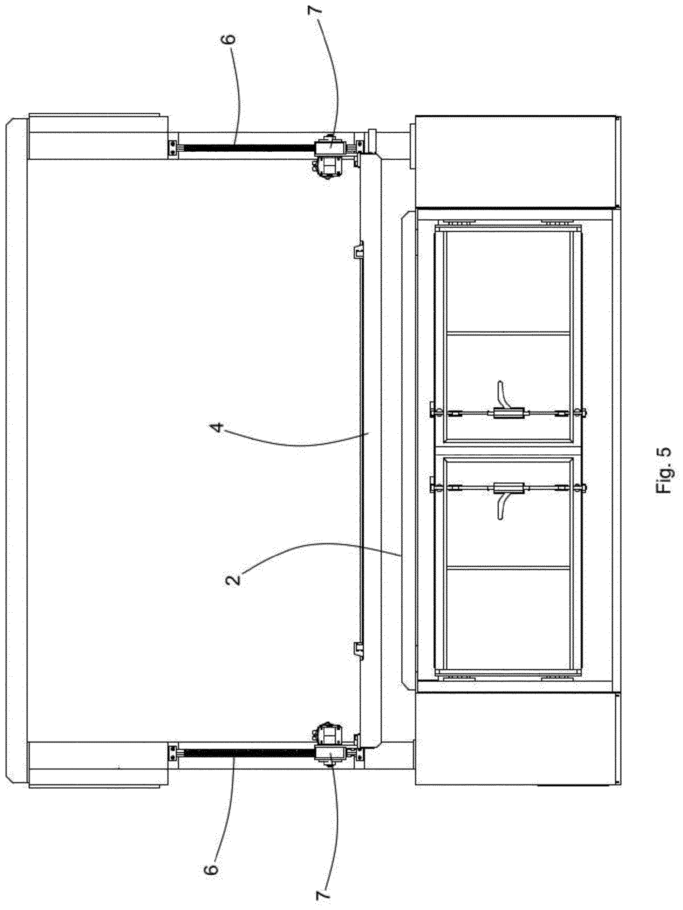

In the example of Figures 4 and 5, the thermoforming apparatus 1 comprises a frame 4 (in particular with the function of plate press), without an additional frame 8 with the function of counter-mold and/or support for other equipment.

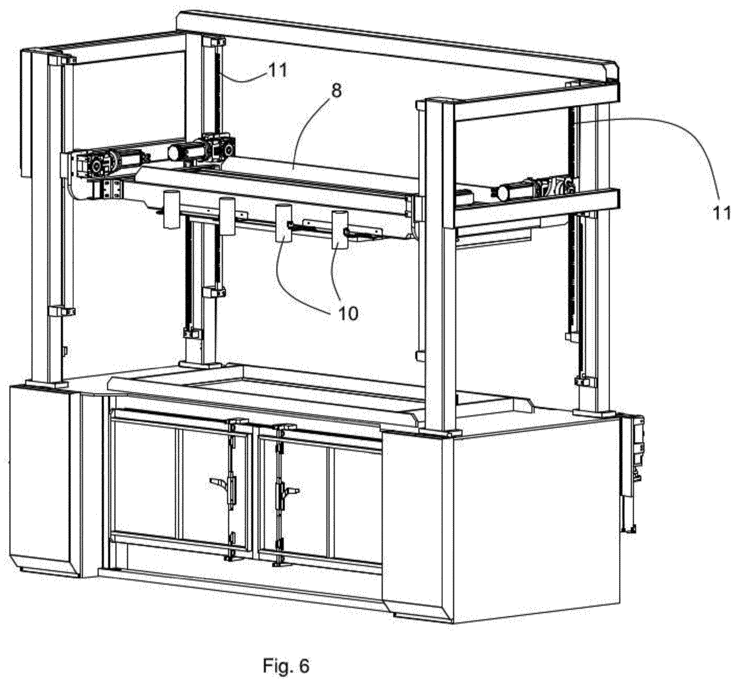

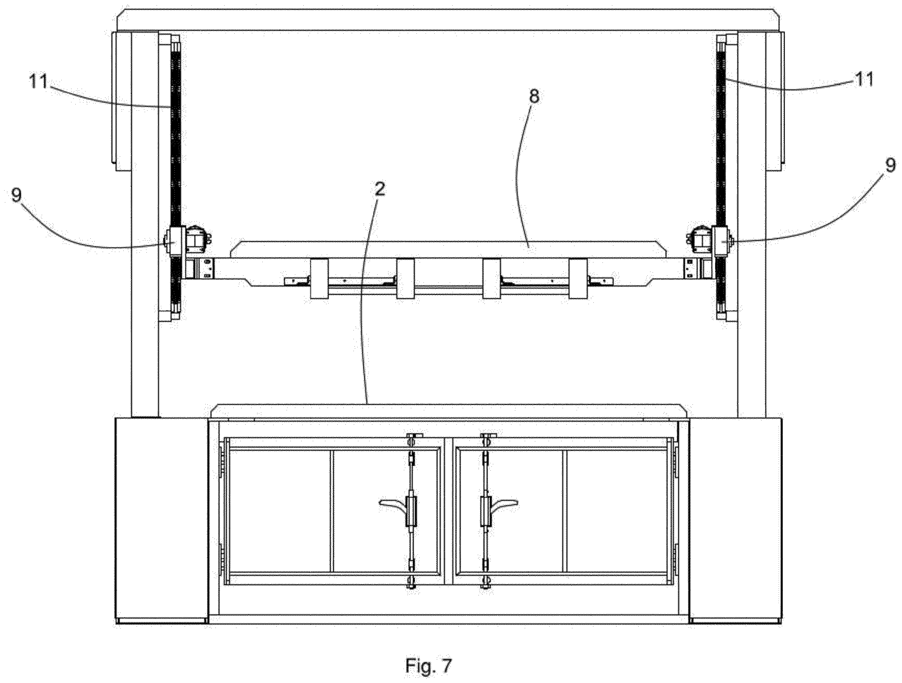

In the example of Figures 6 to 13, the thermoforming apparatus 1 includes a further frame 8 (in particular with the function of counter-mold and/or support for other equipment), without a frame 4 with the function of plate press.

The thermoforming apparatus 1 may comprise, in particular, suction means (for example operating below the die 3) to generate a depression in the thermoforming cavity to perform a vacuum thermoforming.

The suction means may comprise, in particular, suction means of a known type which are not described here in greater detail. In the specific examples illustrated here, all the thermoforming apparatuses 1 are provided with suction means for vacuum thermoforming.

The thermoforming apparatus 1 may be configured, as in these examples, so that at least one drive unit 7 and/or at least one further drive unit 9 and/or each drive unit 7 and/or each further drive unit 9, comprises at least one wheel coupled to the respective linear reaction element (gear 6 or further gear 11) and which may be connected (for example in direct drive) with a rotor of the respective drive motor (for example without the interposition of a gear transmission).

In these specific examples, the reaction element and the wheel comprise, respectively, at least one linear gear and at least one toothed wheel, although it is possible to provide other examples in which the reaction element comprises a friction surface and the wheel comprises a friction wheel configured to frictionally roll on the reaction element.

The thermoforming apparatus 1 may comprise linear guide means which may comprise, in particular, for each upright, at least one fixed vertical linear sliding guide (for example a prismatic guide), associated with the upright 5 and at least one slide sliding on the fixed vertical linear guide mounted on the frame 4.

The vertical movement of the frame 4 is carried out by simultaneously activating the various (four) drive units 7, in a coordinated manner by the electronic control means so that the movement takes place in a regular manner, keeping the frame 4 in a substantially horizontal position, with the four vertices of the rectangular perimeter structure that are moved substantially at the same speed and remaining substantially instant by instant at the same height, with the possibility of correcting any misalignment of one of the vertices of the rectangular perimeter structure by accelerating or decelerating the respective drive motor.

Similarly, the vertical movement of the further frame 8 is carried out by simultaneously operating the various (four) further drive units 9, in a coordinated manner by the electronic control means so that the movement takes place in a regular manner, while maintaining the further frame 8 in a substantially horizontal position, as described above for frame 4, including the possibility of correcting any misalignment.

The thermoforming apparatus 1 comprises a plurality of columns or uprights, each of which is provided with at least one linear gear which acts as a reaction member for the transmission of motion (coupled with a motorized pinion) and also acts as a guide of the vertical movement of the movable unit (frame 4 and/or further frame 8), in particular of a movable unit with a centrally free perimeter structure, which can perform at least one operational task in the thermoforming process, for example a plate press function, or as a support for a counter-mold and/or for other equipment.

The thermoforming apparatus 1 comprises a plurality of motorized units (drive units 7 and/or further drive units 9) which are carried by the vertically movable unit (frame 4 and/or further frame 8) and which actuate the movement thereof.

The various motors of the drive units 7 and/or of the further drive units 9 are coordinated with each other by means of a control software that maintains the alignment and horizontality of the respective perimeter structure. It is possible to provide that the control means (programmable electronic, for example a control software) is configured to activate at least one vertical movement (for example an alternating or oscillating movement up and down) of the cooling means during the cooling phase, for give greater cooling efficiency, where this vertical movement may be programmed, in particular, in such a way as to modify the direction of the flow of the cooling fluid according to one or more characteristics of the piece to be cooled, for example to adapt the cooling flow the morphological characteristics of the piece to be cooled. The aforementioned vertical movement of the cooling means may include, in particular, a vertical movement (for example alternating) of the further frame 8.

The apparatus may comprise, in particular, moving means for controlling an independent movement of at least one cooling port 10 (for example of one, two, three or more cooling ports 10) with respect to the other cooling ports 10 cooling and/or with respect to the further frame 8, in particular in such a way as to modify the direction of the flow of the cooling fluid according to one or more characteristics of the piece to be cooled, for example to adapt the cooling flow to the morphological characteristics of the piece during the cooling phase of the piece itself. This independent movement may include, in particular, an alternating or oscillatory movement (for example a linear movement in a vertical direction or an oscillation around a horizontal rotation pin) of the port 10 with respect to the further frame 8 and/or with respect to the others ports 10. The means for the independent movement of at least one port 10 may comprise, in particular, at least one actuator, for example arranged on the further frame 8, in particular a linear actuator for a vertical movement of the port 10, or a rotary actuator for the swing of the port 10 around a pin.

The aforementioned movements of the cooling means (of the further frame 8 and/or of one or more ports 10 with respect to the further frame 8) may be activated, in particular, simultaneously with the emission of the cooling flow, or alternating movements of the cooling means and emissions of the cooling flow.

It is possible to provide, as in these examples, that the frame 4 comprises a perimeter structure (for example with the function of pressing the plate) which is arranged (in particular considering a vertical projection) at the edge of the forming area, that is at the sealing area (with gasket) which allows to hermetically close the forming cavity of the die 3 where the thermoformable material is formed.

It is possible to provide, as in these examples (see Figures 1 to 3 and 6 to 13), that the further frame 8 comprises a perimeter structure which is arranged outside (considering a vertical projection) of the molding, i.e. outside the vertical space above the molding cavity of the die 3 where the material is formed.

It is possible to provide, as in the example of Figures 1 to 3 and 8 to 13, that the further frame 8 comprises a perimeter structure with different transverse dimensions (in this example higher) than a perimeter structure of the frame 4, for example in such a way that the perimeter structure of the further frame 8 in its vertical downward movement can pass in a vertical direction, at least in part, the perimeter structure of the frame 4, for example passing at least in part outside the structure perimeter of the frame 4, in particular in such a way as to surround the perimeter structure of the frame 4.

It is possible to provide, as in the examples shown in Figures 6 to 13, that the perimeter structure of said further frame 8 has the function of counter-mold and/or support for cooling ports 10.

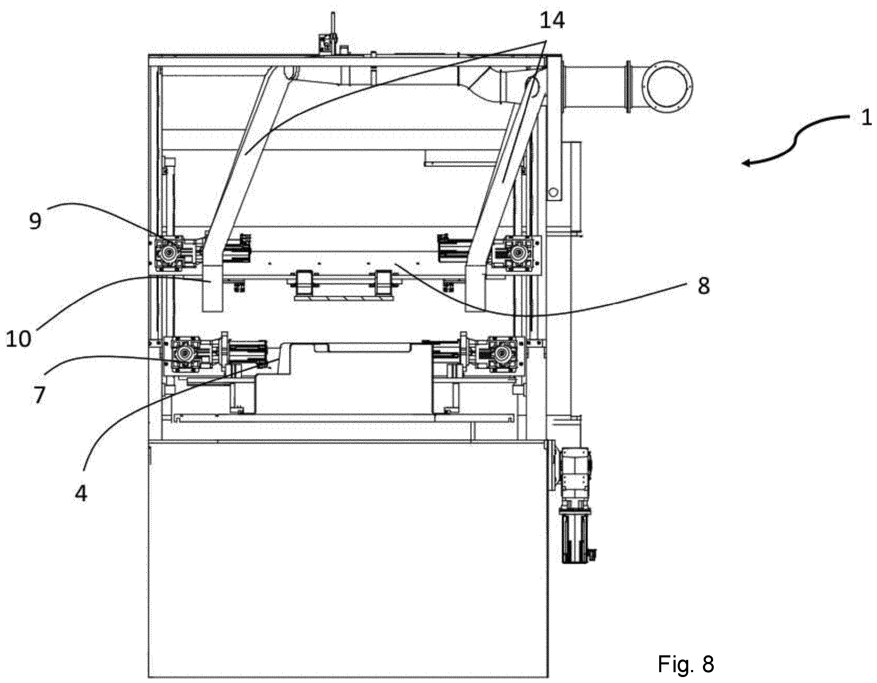

The thermoforming apparatus also comprises a cooling fluid flow generator 12 connected, as in the examples shown in Figures 8 to 13, to the cooling ports 10 by means of connection means 13 suitable for conveying the cooling fluid towards the thermoformed material. The connecting means 13 may be of the tubular type, and may comprise a plurality of cylindrical-shaped elements connected to each other by means of flanges. The generator 12 may be arranged, in particular, externally with respect to the further frame 8, in particular it may be arranged on the support means configured to support the frame 4 and/or the further frame 8. It is possible to provide that the generator 12 is arranged in other positions of the apparatus, or that it is located in a remote position with respect to the apparatus.

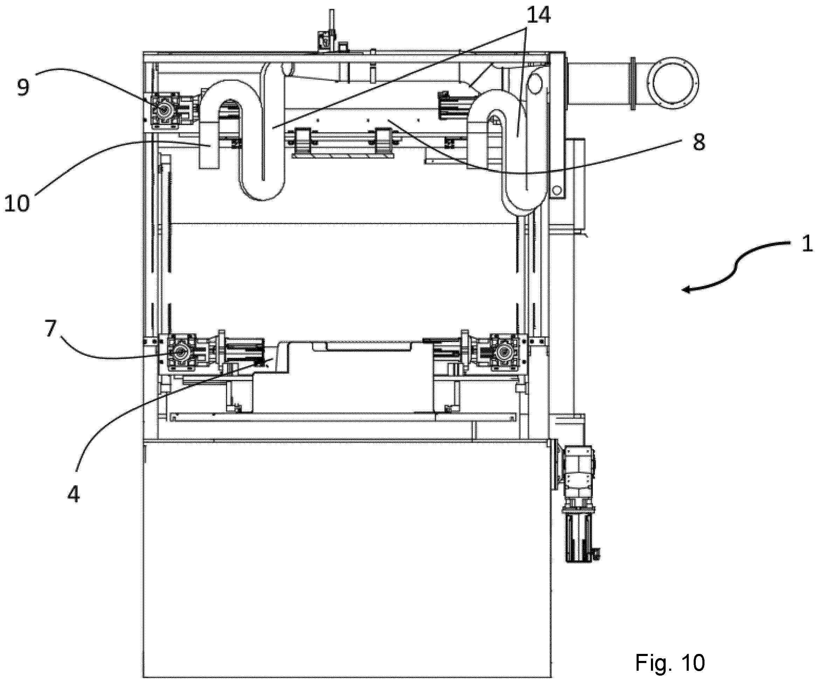

In particular, as in the examples shown in Figures 8 to 13, the connecting means comprises a main duct and a branch of secondary ducts, which branch ends near the ports 10 with flexible ducts 14 to facilitate movement vertical frame 8 between a lower position (Figures 8, 9, 12) and an upper position (Figures 10, 11, 13).

The connecting means 13 is sized and conformed so as to optimize the flow of the cooling fluid and reduce efficiency losses. In particular, in a non-limiting manner, the examples shown in Figures 8 to 13 provide for a progressive reduction in the diameter of the cylindrical tubular elements in the progressive passage from the cooling fluid generator 12 to one or more cooling ports 10.

In an alternative example, not shown in the figures, each cooling port is equipped with a fan to generate the flow of the cooling fluid to be directed towards the plate to be cooled. The fan may be powered by current. This alternative configuration would significantly reduce the overall volume of the entire apparatus.

The thermoforming apparatus 1 allows to carry out a movement of each movable unit (frame 4 and/or further frame 8) generating a stress which, at least mainly, is exerted (in traction) on the uprights 5, which form support and guide columns. This stress may include, in particular, a mechanical stress exerted mainly on the uprights 5 (in particular a tensile stress), with the possibility of a relatively low stress on the movable unit (frame 4 and/or further frame 8).

The thermoforming apparatus 1 allows to carry out a movement of each movable unit (frame 4 and/or further frame 8) generating a stress in which the action and reaction forces of the (vertical) motion are arranged substantially at the same height and/or at the area where the driving and/or lateral containment action of the movable unit takes place (i.e. at the height of the toothed wheels). It has been seen, in fact, that the vertical bearing structure (which includes the uprights 5 and/or the further uprights 5) performs both the function of guiding the vertical motion of the movable unit, and the function of reaction element to generate the force of traction that generates the movement itself.

The thermoforming apparatus 1 thus allows to create a relatively light structure, since the stresses are discharged mainly on the vertical structure fixed to the base, so that a particular strength of the movable unit is not required. Furthermore, the movement guide and support system is particularly rigid and precise.

Another advantage of the thermoforming apparatus 1 is that the perimeter structure of the frame 4 and/or the perimeter structure of the further frame 8 may surround the molding area leaving it substantially free and therefore, for example, available and without constraints in order to carry out useful operations for the thermoforming process. In addition, the perimeter structure of the further frame 8 may be external to the perimeter structure of the frame 4, so that the downward axial stroke of the further frame 8 can be relatively high.

The thermoforming apparatus 1 described above is of the so-called "closed chamber" type, in which the forming cavity can be sealed by means of the frame 4 with a plate-pressing edge and with the aid of a gasket to create a hermetically sealed chamber, i.e. a volume under the thermoformable material at the die 3 where it is possible to generate a depression.

Another advantageous aspect consists in that the thermoforming apparatus 1 may comprise, in particular, at least one frame with a perimeter structure open in the center, particularly light and at the same time sturdy, which can support tooling means such as, for example a counter mold or an additional mold, and which can be used in combination with a further frame which may also be, in particular, provided with a perimeter structure open in the center.

## Claims

1. Thermoforming apparatus (1) comprising:
- a die (3) for thermoforming plate or sheet material heated to a temperature suitable for thermoforming;
- at least one frame (4) arranged above said die (3) and movable at least in a vertical direction;
- support means arranged to support said frame (4);
- at least one further frame (8) that is movable at least in a vertical direction in both directions with respect to said at least one frame (4); the apparatus being **characterized in that** it further comprises
- at least one fluid outlet port (10) arranged on said further frame (8) and configured to emit a cooling fluid;
- generating means configured to generate a flow of the cooling fluid emitted by said at least one port (10).

2. Apparatus according to claim 1, comprising a plurality of fluid outlet ports (10) arranged on said further frame (8), each port of said plurality of ports being configured to emit at least a part of said flow.

3. Apparatus according to claim 1 or 2, wherein said generating means comprises at least one fan operatively associated with a respective port.

4. Apparatus according to claims 3 and 2, wherein said generating means comprises a plurality of fans, each fan of said plurality of fans being operatively associated with a respective port of said plurality of ports.

5. Apparatus according to claim 3 or 4, wherein each fan is driven by electrical drive.

6. Apparatus according to any one of the preceding claims, wherein said generating means (12) is connected to said at least one port (10) by means of connection means (13) for transporting said cooling fluid.

7. Apparatus according to claim 6, wherein said generating means (12) is arranged externally with respect to said at least one further frame (8), in particular said generating means is arranged on said support means.

8. Apparatus according to claim 6 or 7, comprising a plurality of fluid outlet ports (10), said connecting means (13) comprising a plurality of conduit portions for connecting said generating means (12) with said plurality of fluid outlet ports (10).

9. Apparatus according to claim 8, wherein said connecting means (13) comprises a main conduit and a branch of secondary conduits which end in proximity of said ports (10), in particular said connecting means (13) comprises flexible conduits (14) to facilitate vertical movement of said further frame (8).

10. Apparatus according to any one of the preceding claims, wherein said further frame (8) comprises a perimeter structure which defines a central opening, said apparatus comprising a plurality of fluid outlet ports (10) arranged on at least two sides of said structure perimeter.

11. Apparatus according to any one of the preceding claims, comprising programmable electronic control means configured to control at least one vertical displacement, in particular alternating vertical displacements up and down, of said further frame (8) during a cooling phase of the material so as to change the flow direction of the cooling fluid according to one or more characteristics of the material to be cooled.

12. Apparatus according to any one of the preceding claims, comprising moving means for moving said at least one fluid outlet port (10) with respect to said further frame (8) and programmable electronic control means configured to control a movement of said at least one port (10) with respect to said further frame (8) during a step of cooling the material.

## Patentansprüche

1. Thermoformungsvorrichtung (1), umfassend:
- eine Matrize (3) zum Thermoformen von Platten- oder Folienmaterial, die auf eine für das Thermoformen geeignete Temperatur erhitzt wird;
- mindestens einen Rahmen (4), der oberhalb der Matrize (3) angeordnet und zumindest in vertikaler Richtung beweglich ist;
- ein Stützmittel, das so angeordnet ist, dass es den Rahmen (4) stützt;
- mindestens einen weiteren Rahmen (8), der zumindest in vertikaler Richtung in beide Richtungen in Bezug auf den mindestens einen Rahmen (4) beweglich ist;
wobei die Vorrichtung **dadurch gekennzeichnet ist, dass** sie ferner umfasst
- mindestens eine Fluidauslassöffnung (10), die an dem weiteren Rahmen (8) angeordnet und dazu eingerichtet ist, ein Kühlfluid abzugeben;
- ein Erzeugungsmittel, das dazu eingerichtet ist, einen Fluss des von der mindestens einen Öffnung (10) abgegebenen Kühlfluids zu erzeugen.

2. Vorrichtung nach Anspruch 1, umfassend eine Vielzahl von Fluidauslassöffnungen (10), die an dem weiteren Rahmen (8) angeordnet sind, wobei jede Öffnung der Vielzahl von Öffnungen dazu eingerichtet ist, zumindest einen Teil des Flusses abzugeben.

3. Vorrichtung nach Anspruch 1 oder 2, wobei das Erzeugungsmittel mindestens ein Gebläse umfasst, das betriebsmäßig einer entsprechenden Öffnung zugeordnet ist.

4. Vorrichtung nach Anspruch 3 und 2, wobei das Erzeugungsmittel eine Vielzahl von Gebläsen umfasst, wobei jedes Gebläse der Vielzahl von Gebläsen betriebsmäßig einer jeweiligen Öffnung der Vielzahl von Öffnungen zugeordnet ist.

5. Vorrichtung nach Anspruch 3 oder 4, wobei jedes Gebläse durch einen elektrischen Antrieb angetrieben ist.

6. Vorrichtung nach einem der vorhergehenden Ansprüche, wobei das Erzeugungsmittel (12) mit der mindestens einen Öffnung (10) mittels einem Verbindungsmittel (13) zum Transportieren des Kühlfluids verbunden ist.

7. Vorrichtung nach Anspruch 6, wobei das Erzeugungsmittel (12) außerhalb mit Bezug auf den mindestens einen weiteren Rahmen (8) angeordnet ist, insbesondere ist das Erzeugungsmittel auf dem Stützmittel angeordnet.

8. Vorrichtung nach Anspruch 6 oder 7, umfassend eine Vielzahl von Fluidauslassöffnungen (10) umfasst, wobei das Verbindungsmittel (13) eine Vielzahl von Leitungsabschnitten zum Verbinden des Erzeugungsmittels (12) mit der Vielzahl von Fluidauslassöffnungen (10) umfasst.

9. Vorrichtung nach Anspruch 8, wobei das Verbindungsmittel (13) eine Hauptleitung und eine Verzweigung von Nebenleitungen umfasst, die in der Nähe der Öffnungen (10) enden, insbesondere umfasst das Verbindungsmittel (13) flexible Leitungen (14), um vertikale Bewegung des weiteren Rahmens (8) zu ermöglichen.

10. Vorrichtung nach einem der vorhergehenden Ansprüche, wobei der weitere Rahmen (8) eine Umfangsstruktur umfasst, die eine zentrale Öffnung definiert, wobei die Vorrichtung eine Vielzahl von Fluidauslassöffnungen (10) umfasst, die an mindestens zwei Seiten des Strukturumfangs angeordnet sind.

11. Vorrichtung nach einem der vorhergehenden Ansprüche, umfassend ein programmierbares elektronisches Steuermittel, das dazu eingerichtet ist, mindestens eine vertikale Verschiebung, insbesondere abwechselnde vertikale Verschiebungen nach oben und unten, des weiteren Rahmens (8) während einer Kühlphase des Materials zu steuern, um die Fliessrichtung des Kühlfluids entsprechend einer oder mehrerer Eigenschaften des zu kühlenden Materials zu ändern.

12. Vorrichtung nach einem der vorhergehenden Ansprüche, umfassend ein Bewegungsmittel zum Bewegen der mindestens einen Fluidauslassöffnung (10) in Bezug auf den weiteren Rahmen (8) und ein programmierbares elektronisches Steuermittel, das dazu eingerichtet ist, eine Bewegung der mindestens einen Öffnung (10) in Bezug auf den weiteren Rahmen (8) während eines Schritts des Kühlens des Materials zu steuern.

## Revendications

1. Appareil de thermoformage (1) comprenant :
- une matrice (3) pour le thermoformage d'une plaque ou d'une tôle chauffée à une température adaptée au thermoformage ;
- au moins un cadre (4) agencé au-dessus de ladite matrice (3) et mobile au moins dans une direction verticale ;
- des moyens de support agencés pour supporter ledit cadre (4) ;
- au moins un autre cadre (8) qui est mobile au moins dans une direction verticale dans les deux directions par rapport audit au moins un cadre (4) ; l'appareil étant **caractérisé en ce qu'**il comprend en outre
- au moins un orifice (10) de sortie de fluide agencé sur ledit autre cadre (8) et configuré pour émettre un fluide de refroidissement ;
- des moyens de génération configurés pour générer un écoulement du fluide de refroidissement émis par ledit au moins un orifice (10).

2. Appareil selon la revendication 1, comprenant une pluralité d'orifices (10) de sortie de fluide agencés sur ledit autre cadre (8), chaque orifice de ladite pluralité d'orifices étant configuré pour émettre au moins une partie dudit écoulement.

3. Appareil selon la revendication 1 ou 2, dans lequel lesdits moyens de génération comprennent au moins un ventilateur fonctionnellement associé à un orifice respectif.

4. Appareil selon les revendications 3 et 2, dans lequel lesdits moyens de génération comprennent une pluralité de ventilateurs, chaque ventilateur de ladite pluralité de ventilateurs étant fonctionnellement associé à un orifice respectif de ladite pluralité d'orifices.

5. Appareil selon la revendication 3 ou 4, dans lequel chaque ventilateur est entraîné par un entraînement électrique.

6. Appareil selon l'une des revendications précédentes, dans lequel lesdits moyens de génération (12) sont connectés audit au moins un orifice (10) au moyen de moyens de connexion (13) permettant de transporter ledit fluide de refroidissement.

7. Appareil selon la revendication 6, dans lequel lesdits moyens de génération (12) sont agencés en externe par rapport audit au moins un autre cadre (8), en particulier lesdits moyens de génération sont agencés sur lesdits moyens de support.

8. Appareil selon la revendication 6 ou 7, comprenant une pluralité d'orifices (10) de sortie de fluide, lesdits moyens de connexion (13) comprenant une pluralité de parties de conduite permettant de connecter lesdits moyens de génération (12) à ladite pluralité d'orifices (10) de sortie de fluide.

9. Appareil selon la revendication 8, dans lequel lesdits moyens de connexion (13) comprennent une conduite principale et une branche de conduites secondaires qui se terminent à proximité desdits orifices (10), en particulier lesdits moyens de connexion (13) comprennent des conduites flexibles (14) pour faciliter un mouvement vertical dudit autre cadre (8) .

10. Appareil selon l'une des revendications précédentes, dans lequel ledit autre cadre (8) comprend une structure de périmètre qui définit une ouverture centrale, ledit appareil comprenant une pluralité d'orifices (10) de sortie de fluide agencés sur au moins deux côtés dudit périmètre de structure.

11. Appareil selon l'une des revendications précédentes, comprenant des moyens de commande électroniques programmables configurés pour commander au moins un déplacement vertical, en particulier des déplacements verticaux alternatifs vers le haut et vers le bas, dudit autre cadre (8) pendant une phase de refroidissement du matériau de manière à modifier la direction d'écoulement du fluide de refroidissement en fonction d'une ou de plusieurs caractéristiques du matériau devant être refroidi.

12. Appareil selon l'une des revendications précédentes, comprenant des moyens mobiles permettant de déplacer ledit au moins un orifice (10) de sortie de fluide par rapport audit autre cadre (8) et des moyens de commande électroniques programmables configurés pour commander un mouvement dudit au moins un orifice (10) par rapport audit autre cadre (8) pendant une étape de refroidissement du matériau.
